# EUROPÄISCHE PATENTSCHRIFT

(11) **EP 2 956 390 B1**
(45) Veröffentlichungstag und Bekanntmachung des Hinweises auf die Patenterteilung: **27.03.2019**
(21) Anmeldenummer: 14703811.1
(22) Anmeldetag: 06.02.2014
(51) Int. Cl.: B65G 43/08, B65G 47/08, B65G 61/00

(54) **VERFAHREN UND VORRICHTUNG ZUR STÖRUNGSMELDUNG BEI DER GRUPPIERUNG VON ARTIKELN**
METHOD AND DEVICE FOR REPORTING DISRUPTION IN THE GROUPING OF ARTICLES
PROCÉDÉ ET DISPOSITIF PERMETTANT LE SIGNALEMENT D'UNE PERTURBATION LORS DU GROUPEMENT D'ARTICLES

(30) Priorität: 12.02.2013 DE 102013202247
(43) Veröffentlichungstag der Anmeldung: 23.12.2015
(73) Patentinhaber: Krones AG, 93073 Neutraubling (DE)
(72) Erfinder: PRONOLD, Timo, 93073 Neutraubling (DE)
(74) Vertreter: Benninger, Johannes
(86) Internationale Anmeldenummer: PCT/EP2014/052333
(87) Internationale Veröffentlichungsnummer: WO 2014/124861

(56) Entgegenhaltungen:
- EP-A1- 1 991 465
- WO-A1-2012/123033
- WO-A1-2012/152390
- DE-A1- 19 930 019
- DE-A1-102006 015 689
- DE-A1-102010 015 584
- US-A1- 2004 186 618

## Beschreibung

Die vorliegende Erfindung betrifft ein Verfahren zur Störungsmeldung während des Umgangs mit Artikeln, bei der Gruppierung von Artikeln.

Der Umgang mit Artikeln sieht häufig vor, diese einzeln oder zu mehreren gleichzeitig beispielsweise zu Artikellagen zu gruppieren, beispielsweise damit die Artikellagen später an einem Stapelplatz zu einem Stapel aufgestapelt werden können, in welchem Stapel die Artikellagen dann Stapellagen bilden.

Bei den Artikeln kann es sich beispielsweise um Objekte, wie etwa verpackte oder unverpackte Gegenstände, Behälter, Kartonagen, oder um Gebinde aus mehreren Objekten handeln, wobei die Objekte eines Gebindes beispielsweise vermittels einer Umreifung, einer Umverpackung, wie etwa einer Umwickelung, einem Schrumpfschlauch oder eines Kartons oder eines Tragegestells zusammengehalten werden, um nur einige denkbare Ausgestaltungen zu nennen.

Das Gruppieren von Artikeln beispielsweise zu Artikellagen erfolgt besonders effektiv vermittels so genannter Gruppierstationen, die vollautomatisch betrieben sein können. Gruppierstationen können eine oder mehrere unter dem Begriff Manipulator zusammengefasste Drehstationen, Weichen und/oder auch ein- oder mehrachsige Handhabungsautomaten umfassen, welche auf einer Bereitstellungsfläche Artikel aus einem ein- oder mehrbahnig zulaufenden Artikelstrom immer wieder zu Artikellagen gruppieren, die daraufhin nach deren Vervollständigung abtransportiert werden, um Platz für eine neu zu gruppierende Artikellage zu schaffen.

Dabei werden die Artikel hinsichtlich deren Lage und/oder Position im ein- oder mehrbahnig zulaufenden Artikelstrom sensorisch erfasst, um sie anschließend entsprechend ihrer Gruppierung in der zu erzielenden Artikellage vermittels eines oder mehrerer Manipulatoren manipulieren zu können. Gruppierstationen sind in der Regel taktgesteuert und führen eine für die momentan zu gruppierenden Artikel definierte Schrittkette aus, unabhängig davon, ob sich ein oder mehrere Artikel in einer bis dato erzeugten Gruppierung in der zum Erhalt einer gewünschten Artikellage notwendigen richtigen Lage bzw. Ausrichtung und/oder an der richtigen Position bzw. Stelle der zu erzeugenden, gewünschten Artikellage befinden. Deshalb werden die Artikel in der durch die Manipulation bis dato erzeugten Gruppierung ebenfalls sensorisch erfasst, um fehlstehende oder umgefallene Artikel zu erkennen. Im Bereich der Bereitstellungsfläche einer Gruppierstation befinden sich hierzu mehrere Lichtschranken, welche die bis dato gruppierten Artikel überwachen und die Gruppierstation anhalten, falls sich ein oder mehrere Artikel an der falschen Position oder in einer falschen Ausrichtung befindet.

Nachdem fehlstehende oder umgefallene Artikel bei einem weiteren Betrieb einer Gruppierstation zu Kollisionen mit neu hinzuzugruppierenden Artikeln einhergehend mit Beschädigungen günstigstenfalls der kollidierenden Artikel, schlimmstenfalls der Gruppierstation oder Teilen von dieser führen können, werden Gruppierstationen unter Ausgabe einer Störungsmeldung abgeschaltet, wenn in einer bis dato erzeugten Gruppierung fehlstehende oder umgefallene Artikel sensorisch erfasst werden.

Um die Störung zu beheben, wird die Bereitstellungsfläche leergeräumt. Die Gruppierstation beginnt daraufhin wieder mit der Gruppierung einer neuen Artikellage durch Ausführung des ersten Schritts ihrer Schrittkette.

Die meist noch einwandfreien ausgeräumten Artikel gelten dabei als Ausschuss, da es nur unter erheblichem Aufwand möglich ist, diese wieder in den ein- oder mehrbahnig zulaufenden Artikelstrom einzugliedern.

Neben dem unerwünscht hohen Ausschuss stellt die zum vollständigen Leerräumen der Bereitstellungsfläche notwendige Stillstandszeit der Gruppierstation und damit meist einer vollständigen, der Gruppierstation vorausgehenden Produktionslinie, wie beispielsweise einer Abfüllanlage, einen erheblichen Nachteil bekannter Gruppierstationen dar. Das Leerräumen wird insbesondere durch notwendige Arbeitsschutzmaßnahmen erschwert, die eine Kapselung der Bereitstellungsfläche zumindest während des Betriebs der Gruppierstation vorsehen, so dass das Leerräumen der Bereitstellungsfläche vom Zeitaufwand her einem Ausräumen eines schwer zugänglichen Raums gleichkommt.

Durch DE 37 04 423 A1 ist bekannt, zum Einlegen von Gegenständen in eine Verpackungseinheit die räumliche Lage der Gegenstände auf einer Zuführfördereinrichtung mathematisch zu erfassen, die Gegenstände vermittels in drei Achsen frei programmierbarer Handhabungsautomaten in vorbestimmter Weise auszurichten und in gleichmäßigen Abständen auf eine Weiterfördereinrichtung zu überführen. Die Weiterfördereinrichtung leitet die Gegenstände einem Einlegebereich zu, wo über Einlegeköpfe das positionierte Einlegen der Gegenstände in die Verpackungseinheit erfolgt. Die Handhabungsautomaten werden von einem Rechner gesteuert, der die Positions- und Lagedaten der Gegenstände auf der Zuführfördereinrichtung von einem optischen Erkennungssystem erhält.

Durch DE 600 34 527 T2 ist bekannt, die Ausrichtung eines flexibelwandigen Gegenstands zu bestimmen und gegebenenfalls vermittels eines Manipulators zu ändern. Die Ausrichtung wird dabei vermittels eines Musterdetektors, der ein Muster an einer Fläche des Gegenstands erfasst, und vermittels eines Prozessors, der das erfasste Muster mit jeweils einer Anzahl von vorbestimmten Mustern vergleicht, die jeweilige Ausrichtungen des Gegenstands darstellen, identifiziert.

Durch DE 10 2007 036 020 A1 ist bekannt, einen Strom unterschiedlich ausgerichteter, vereinzelter Gegenstände, die innerhalb eines vorgegebenen Winkelbereichs in unterschiedlicher Ausrichtung auf einer Zufuhrtransporteinrichtung transportiert werden, vermittels einer zwischengeschalteten Ausrichttransporteinrichtung zu einem auf einer Abtransporteinrichtung abtransportierten Strom gleich ausgerichteter Gegenstände zu vereinheitlichen. Hierzu werden zunächst die auf der Zufuhrtransporteinrichtung transportierte, vereinzelte Gegenstände vermittels einer Bildaufnahmeeinrichtung oder eines Kamerasystems in ihrer Ausrichtung erfasst. Dann wird ein Gegenstand nach dem anderen entsprechend deren Vereinzelung auf der Zufuhrtransporteinrichtung der Ausrichttransporteinrichtung übergeben, die eine von der vermittels der Bildaufnahmeeinrichtung oder eines Kamerasystems erfassten Ausrichtung des jeweils auf ihr befindlichen Gegenstands abhängige Drehung um eine Hochachse erfährt, so dass die Gegenstände einer nach dem anderen alle gleich ausgerichtet der Abtransporteinrichtung zugeführt werden.

Durch WO 2012/123033 A1 ist bekannt, Artikel durch eine Bedienperson in einem definierten Arbeitsbereich auf eine vorgegebene Weise, die der Bedienperson visuell und/oder auditiv mitgeteilt wird, zu manipulieren bzw. zu stapeln. Mittels eines Bewegungssensorsystems werden die Bewegungen der Bedienperson im Arbeitsbereich erfasst und in entsprechende Bewegungssingale umgewandelt. Die Bewegungssignale werden anschließend von einer Rechnereinheit verarbeitet und zwar derart, dass der Bedienperson eine richtige oder falsche Durchführung der vorgegebenen Manipulationsweise mitgeteilt wird.

Durch EP 2 500 147 A2 ist bekannt, Artikel in einem vermittels einer Fördereinrichtung transportierten Artikelstroms vermittels einer Bildaufnahmeeinrichtung zu erfassen. Die Bildaufnahmeeinrichtung erfasst dabei zunächst die gesamte Länge der Fördereinrichtung. Zur Anpassung der Erfassung einzelner Artikel in dem Artikelstrom an unterschiedlich dimensionierte Artikel ist ein Display vorgesehen, auf dem das von der Bildaufnahmeeinrichtung erfasste Bild dargestellt wird. Durch eine Benutzerschnittstelle kann ein Bereich als eine Startbedingung für die Erfassung eines Artikels eingestellt werden, basierend auf der Größe einer Partie des erfassten Bilds, innerhalb welcher Partie sich ein zu erfassender Artikel befindet. Die der Dimension des Artikels entsprechende Größe dieser Partie wird durch das Verhältnis des Bereichs zur Gesamtlänge der Fördereinrichtung bestimmt.

Die DE 10 2010 015584 A1 offenbart ein Verfahren zur Störungsmeldung bei der Gruppierung von Artikeln, wobei bei der Gruppierung: - Artikel aus einem zulaufenden Artikelstrom auf einer Bereitstellungsfläche gruppiert und nach der Vervollständigung der Gruppierung abtransportiert werden, um Platz für eine neue Gruppierung zu schaffen, - die Artikel hinsichtlich deren Eingangsausrichtung und/oder -position im Artikelstrom sensorisch erfasst werden, um sie anschließend in eine Endausrichtung und Endposition entsprechend ihrer Anordnung in der zu erzielenden Gruppierung zu verbringen, - die auf der Bereitstellungsfläche befindlichen Artikel ebenfalls sensorisch erfasst werden, umfassend die Verfahrensschritte: - Gewinnung einer tatsächlichen Ist-Ausrichtung und Ist-Position der auf der Bereitstellungsfläche befindlichen Artikel anhand der sensorischen Erfassung der auf der Bereitstellungsfläche befindlichen Artikel, - Erkennen fehlstehender oder umgefallener Artikel durch Vergleich der tatsächlichen Ist-Position der auf der Bereitstellungsfläche befindlichen Artikel mit einer zu erzielenden Soll-Position der Artikel in einer bis dato aus den auf der Bereitstellungsfläche befindlichen Artikel zu erzeugenden Gruppierung, -wenn erkannt wurde, dass sich ein oder mehrere Artikel an einer falschen Position befinden: - Unterbrechung der Gruppierung, und - automatische Behebung der Störung durch eine Änderung der Position des einen oder der mehreren Artikel, der oder die sich an einer falschen Position befinden, wobei eine sensorische Erfassung der Ist-Ausrichtung und Ist-Position der Artikel auf der Bereitstellungsfläche anhand einer Bilderfassung erfolgt.

Der Erfindung liegt die Aufgabe zu Grunde, ein Verfahren zur Störungsmeldung während des Umgangs mit Artikeln, insbesondere bei der Gruppierung von Artikeln zu schaffen, welches eine Störung bei der Gruppierung von Artikeln beispielsweise zu einer Artikellage meldet und dabei gleichzeitig die Ursachenfindung erleichtert, um eine Beseitigung der Ursache der Störung zu erleichtern und dadurch zu beschleunigen. Darüber hinaus ist es eine Aufgabe der Erfindung, eine Vorrichtung zur Durchführung eines solchen Verfahrens anzugeben.

Die Aufgabe wird jeweils gelöst durch die Merkmale der unabhängigen Ansprüche.

Weitere vorteilhafte Ausgestaltungen werden durch die Unteransprüche beschrieben.

Die Erfindung betrifft demnach ein Verfahren zur Störungsmeldung bei der Gruppierung von Artikeln. Bei der Gruppierung werden Artikel aus einem ein- oder mehrbahnig zulaufenden Artikelstrom auf einer beweglichen, beispielsweise zumindest abschnittsweise mit dem Artikelstrom bewegten, oder fest stehenden Bereitstellungsfläche immer wieder beispielsweise zu Artikellagen gruppiert, die daraufhin nach deren Vervollständigung weiter- oder abtransportiert werden, um Platz für eine neu zu gruppierende Gruppierung zu schaffen.

Dabei werden die Artikel hinsichtlich deren Eingangsausrichtung und/oder Eingangsposition im ein- oder mehrbahnig zulaufenden Artikelstrom sensorisch erfasst, um sie anschließend in eine Endausrichtung und -position entsprechend ihrer Anordnung in der zu erzielenden Gruppierung beispielsweise vermittels eines oder mehrerer Manipulatoren zu manipulieren. Die alternativ fakultative oder kombinatorische Verknüpfung der sensorischen Erfassung der im ein- oder mehrbahnig zulaufenden Artikelstrom hinsichtlich deren Eingangsausrichtung und/oder Eingangsposition verdeutlicht hierbei, dass es nicht zwingend sein muss, dass die Eingangsausrichtung und die Eingangsposition vorher erfasst werden muss. Ebenfalls möglich ist es nämlich, dass die Artikel im ein- oder mehrbahnig zulaufenden Artikelstrom sowieso immer gleich gerichtet ankommen. Hierbei ist eine Erfassung der Artikel hinsichtlich sowohl deren Eingangsausrichtung, als auch deren Eingangsposition überflüssig und es kann genügen, beispielsweise lediglich deren Eintreffen, beispielsweise vermittels einer Lichtschranke oder dergleichen, zu erfassen. Ebenfalls ist denkbar, dass die eine Erfassung von Eingangsausrichtung und Eingangsposition hinfällig ist, wenn die Artikel symmetrisch, insbesondere rotationssymmetrisch hinsichtlich deren Grundfläche sind, auf welcher die Artikel aufstehend im ein- oder mehrbahnig zulaufenden Artikelstrom eintreffen, und/oder die Artikel derart beispielsweise zwischen Gassenblechen geführt eintreffen, dass sie beispielsweise gar keine andere Eingangsausrichtung einnehmen können.

Darüber hinaus werden die auf der Bereitstellungsfläche in der durch die Manipulation bis dato erzeugten Anordnung befindlichen Artikel ebenfalls sensorisch erfasst, um fehlstehende oder umgefallene Artikel zu erkennen.

Dabei wird zunächst eine tatsächliche Ist-Ausrichtung und Ist-Position der auf der Bereitstellungsfläche befindlichen Artikel anhand der sensorischen Erfassung der auf der Bereitstellungsfläche in der durch die Manipulation bis dato erzeugten Anordnung befindlichen Artikel gewonnen.

Die Gewinnung der Ist-Ausrichtung ist dabei vorzugsweise nicht nur flächenbezogen, sondern räumlichbezogen. Beispielsweise ist denkbar, dass es bezüglich zuvor beschriebener, beispielsweise hinsichtlich der Geometrie deren Grundfläche symmetrischer Artikel nicht erforderlich ist, deren Ist-Ausrichtung flächenbezogen zu erfassen, da eine Drehung um deren auf der Grundfläche aufstehenden Symmetrieachse keine Auswirkung hinsichtlich der zu erzielenden Gruppierung nach sich zöge. Bei der räumlichbezogenen Erfassung hingegen kann erkannt werden, ob ein Artikel beispielsweise umgestürzt ist und seine im Soll-Zustand beispielsweise vertikal auf der Bereitstellungsfläche aufstehende Längsachse nunmehr beispielsweise parallel zur Bereitstellungsfläche liegt.

Das Erkennen fehlstehender oder umgefallener Artikel erfolgt dann durch Vergleich der tatsächlichen Ist-Ausrichtung und Ist-Position der auf der Bereitstellungsfläche befindlichen Artikel in der durch die Manipulation bis dato erzeugten Anordnung mit einer zu erzielenden Soll-Ausrichtung und Soll-Position der Artikel in einer durch die Manipulation bis dato aus den auf der Bereitstellungsfläche befindlichen Artikel zu erzeugenden Gruppierung.

Wird bei der durch die sensorische Erfassung und den Vergleich der Ist-Ausrichtungen und Ist-Positionen der Artikel auf der Bereitstellungsfläche mit den Soll-Ausrichtungen und Soll-Positionen der Artikel in der bis dato erzeugten Gruppierung vorzugsweise permanent erfolgenden Überwachung der bis dato gruppierten Artikel festgestellt, dass sich ein oder mehrere Artikel an der falschen Position oder in einer falschen Ausrichtung befinden, wird eine Störungsmeldung ausgegeben. Zusätzlich wird die Gruppierung unterbrochen und angehalten, wenn erkannt wurde, dass sich ein oder mehrere Artikel an einer falschen Position oder in einer falschen Ausrichtung befinden. Zusätzlich sowohl zu einer Ausgabe einer Störungsmeldung, als auch zu einer zu einer Unterbrechung der Gruppierung erfolgt eine automatische Behebung der Störung durch eine Änderung der Position und/oder Ausrichtung des einen oder der mehreren Artikel, der oder die sich an einer falschen Position befinden, beispielsweise durch einen Roboter.

Der Roboter umfasst insbesondere mindestens einen Greifarm, mit dem er einen oder mehrere Artikel, die falsch ausgerichtet oder positioniert sind, greifen, schieben, drehen und/oder bewegen kann und anschließend in eine gewünschte Position und/oder Ausrichtung bewegen bzw. ausrichten kann.

Das Verfahren sieht darüber hinaus vor, dass ein oder mehrere Artikel, die sich an einer falschen Position oder in einer falschen Ausrichtung auf der Bereitstellungsfläche und/oder in der bis dato erzeugten Gruppierung befinden, beispielsweise weil sie während ihrer Verbringung in eine ihrer Position innerhalb einer zu erzeugenden Gruppierung entsprechende Endposition verloren wurden oder umgefallen sind, markiert werden.

Die sensorische Erfassung der Ist-Ausrichtungen und Ist-Positionen der Artikel auf der Bereitstellungsfläche erfolgt anhand einer Bilderfassung, wie sie durch Kameras bekannt ist, beispielsweise vermittels eines oder mehrerer bildgebender Sensoren, sowie durch einen Objekt-Erkennungsalgorithmus, mit dem die Artikel innerhalb des von der Bilderfassung überwachten Bereichs, der vorzugsweise die gesamte Bereitstellungsfläche abdeckt, in ihrer Ausrichtung und Lage erkannt werden können.

Vorzugsweise erfolgt die Ausgabe der Störungsmeldung unter gleichzeitiger Darstellung des vermittels der Bilderfassung erfassten Bilds und/oder der vermittels der Bilderfassung erkannten Artikel auf der Bereitstellungsfläche in deren Ist-Ausrichtungen und Ist-Positionen auf einer Anzeigevorrichtung, wie etwa einem Bildschirm, einem Monitor oder einem Display.

Die Erfindung ermöglicht eine Sichtbarmachung der Ursache der Störungsmeldung, indem ein oder mehrere Artikel, die sich an einer falschen Position oder in einer falschen Ausrichtung auf der Bereitstellungsfläche und/oder in der bis dato erzeugten Gruppierung befinden, markiert werden. Die Markierung kann vermittels Farbmarkierung erfolgen. Die Farbmarkierung kann durch einen Farbauftrag erfolgen. Denkbar ist beispielsweise ein Farbauftrag vermittels eines Farbstrahls bzw. Farbsprays oder vermittels Paintballs. Alternativ oder zusätzlich kann die Farbmarkierung durch eine farbige Darstellung zumindest fehlstehender oder umgefallener Artikel in deren momentanen Position und Lage auf einer Anzeigevorrichtung, vorzugsweise einem Bildschirm, einem Monitor oder einem Display erfolgen. Die fehlstehenden oder umgefallenen Artikel können dabei vorzugsweise in Fehlfarben dargestellt und dadurch beispielsweise gegenüber wahlweise ebenfalls dargestellter verbleibender Artikel in einer bis dato erzeugten Gruppierung hervorgehoben werden. Alternativ oder zusätzlich ist eine blinkende Darstellung fehlstehender oder umgefallener Artikel zu deren Markierung und Hervorhebung auf einer Anzeigevorrichtung zusätzlich zum auch verbleibende Artikel in einer bis dato erzeugten Gruppierung wiedergebenden Bild einer Bilderfassung denkbar. Alternativ oder zusätzlich können ein oder mehrere Artikel, die sich an einer falschen Position oder in einer falschen Ausrichtung auf der Bereitstellungsfläche und/oder in der bis dato erzeugten Gruppierung befinden, durch eine Projektion direkt auf der Bereitstellungsfläche markiert werden.

Eine besonders effektive Ausgestaltung des erfindungsgemäßen Verfahrens sieht vor, gleichzeitig den Soll-Zustand der bis dato gruppierten Artikel und/oder der zu erzeugenden Gruppierung anzuzeigen. Dies kann auf derselben Anzeigevorrichtung, vorzugsweise einem Bildschirm, einem Monitor oder einem Display erfolgen, auf der auch die Störungsmeldung ausgegeben wird und/oder auf der die momentane Position und Lage zumindest fehlstehender oder umgefallener Artikel dargestellt wird. Denkbar ist, dies alternativ oder zusätzlich ebenfalls durch eine Projektion direkt auf die Bereitstellungsfläche darzustellen.

Hierdurch kann auf besonders übersichtliche Weise die Ursache der Störungsmeldung angezeigt werden und gleichzeitig wird so eine schnellstmögliche Behebung der Ursache der Störungsmeldung ermöglicht. Die Erfindung schafft hierdurch eine Anleitung und dadurch Vereinfachung und Beschleunigung einer Beseitigung der Ursache der Störungsmeldung.

Die gleichzeitige Anzeige fehlstehender oder umgefallener Artikel und des Soll-Zustands der bis dato gruppierten Artikel und/oder der zu erzeugenden Gruppierung kann als Überlagerung, Nebeneinanderstellung oder abwechselnde Widergabe eines Bilds des Ist-Zustands und eines Bilds des Soll-Zustands erfolgen.

Eine vorteilhafte Ausgestaltung der Erfindung sieht vor, die Gruppierung bevorzugt nicht von Beginn an, sondern besonders bevorzugt von einem passenden Gruppierungsschritt an, selbständig wieder fortzusetzen, sobald ein Zustand wiederhergestellt ist, der einer am Ende eines der Störungsmeldung vorangehenden Gruppierungsschritts oder am Ende des Gruppierungsschritts, während dem die Störungsmeldung erfolgte, vorliegenden, bis dato aus den auf der Bereitstellungsfläche befindlichen Artikeln zu erzeugenden Gruppierung entspricht.

Anhand der erfassten Ist-Ausrichtungen und Ist-Positionen und durch Vergleich mit den Soll-Ausrichtungen und Soll-Positionen der bis dato einer Gruppierung unterzogenen Artikel erfolgt eine vollautomatische Behebung der Störung, indem diejenigen Artikel, die sich nicht in Soll-Ausrichtung und Soll-Position innerhalb einer bis dato zu erzeugenden Anordnung einer zu erhaltenden Gruppierung befinden, beispielsweise anhand deren Markierung erkannt und vermittels eines oder mehrerer, die Gruppierung auf der Bereitstellungsfläche besorgender Manipulatoren aus deren Ist-Ausrichtung und/oder Ist-Position in deren erforderliche Soll-Ausrichtung und/oder Soll-Position verbracht werden.

Ebenfalls denkbar ist eine aktive Unterstützung bei der Beseitigung der Ursache einer Störungsmeldung. Abhängig vom Fehlerbild kann auf der Anzeigevorrichtung dargestellt werden, durch Entfernung und/oder Drehung und/oder Verschiebung welchen fehlstehenden Artikels oder welcher fehlstehender Artikel eine durch eine zu erzielende Gruppierung vorgegebene Anordnung von Artikeln dem Soll-Zustand einer bis dato aus den auf der Bereitstellungsfläche befindlichen Artikeln erzeugten Gruppierung entspricht. Hierdurch können falsche Korrekturen vermieden werden. Ist der Soll-Zustand einer bis dato erzeugten Gruppierung erreicht, kann eine Freigabe erfolgen und die Gruppierstation wieder in Betrieb genommen werden. Darüber hinaus kann bei einer falschen Korrektur auf dem dann vorliegenden Ist-Zustand eine neue Lösung auf der Anzeigevorrichtung dargestellt werden.

Die Erfindung ermöglicht eine Echtzeitkorrekturprüfung bei einer automatischen notwendigen Korrektur der Artikel. Dies wird dadurch erreicht, dass bei einer Störung aufgrund fehlstehender oder umgefallener Artikel die Gruppierstation mittels eines vorzugsweise bildgebenden Sensors den Fehler und damit die Ursache der Störung erkennt, und die die Störung verursachenden fehlstehenden oder umgefallenen Artikel markiert, beispielsweise indem sie auf einer Anzeigevorrichtung nicht nur die Soll-Darstellung einblendet, sondern auch die Ist-Darstellung. Das Bedienpersonal sieht somit auf der Anzeigevorrichtung beide Angaben und muss nur noch die fehlstehenden oder umgefallenen Artikel an die richtige Stelle verschieben bzw. bewegen und/oder nur noch die fehlstehenden oder umgefallenen Artikel entfernen und gegebenenfalls ersetzen. Ist dies erledigt, kann nun die Gruppierstation mittels des vorzugsweise bildgebenden Sensors nochmals nachprüfen, ob alle bis dato gruppierten Artikel korrekt positioniert sind. Ist dies der Fall, so wird die Freigabe erteilt. Andernfalls startet die Prozedur wieder erneut.

Beschrieben wird auch eine nicht erfindungsgemäße Vorrichtung zur Durchführung eines zuvor beschriebenen Verfahrens. Die Vorrichtung umfasst einen oder mehrere, jeweils allein oder gemeinsam einen Überwachungsbereich abdeckende Sensoren zur Erfassung von in den Überwachungsbereich verbrachten Artikeln in deren Ist-Ausrichtungen und Ist-Positionen. Der mindestens eine Sensor überwacht dabei den Überwachungsbereich, indem er diesen vorzugsweise vollständig überschaut, und gibt Sensorsignale aus, die abhängig von den Ist-Ausrichtungen und Ist-Positionen der bis dato in den Überwachungsbereich verbrachten Artikel sind. Ein oder mehrere Sensoren sind dabei so angebracht, dass sie die in den Überwachungsbereich einfahrenden Artikel sowie deren momentane Ist-Ausrichtung und Ist-Position erkennen und verfolgen können.

Mit dem mindestens einen Sensor gekoppelt ist ein Prozessor, der anhand der Sensorsignale die Ist-Ausrichtungen und Ist-Positionen der bis dato in den Überwachungsbereich verbrachten Artikel bestimmt.

Die Vorrichtung umfasst darüber hinaus Mittel zur Markierung von einem oder mehreren bis dato in den Überwachungsbereich verbrachten Artikeln, deren eine oder mehrere Ist-Ausrichtungen und/oder Ist-Positionen nicht mit einer oder mehreren vorgegebenen Soll-Ausrichtungen und Soll-Positionen der bis dato in den Überwachungsbereich verbrachten Artikel übereinstimmen.

Eines oder mehrere dieser Mittel zur Markierung von einem oder mehreren bis dato in den Überwachungsbereich verbrachten Artikeln, deren eine oder mehrere Ist-Ausrichtungen und/oder Ist-Positionen nicht mit einer oder mehreren vorgegebenen Soll-Ausrichtungen und Soll-Positionen der bis dato in den Überwachungsbereich verbrachten Artikel übereinstimmen können wie bereits zuvor in Verbindung mit dem Verfahren beschrieben ausgeführt sein, beispielsweise in Form einer Anzeigevorrichtung, einer Projektionsvorrichtung oder einer Farbauftragungsvorrichtung.

Bevorzugt umfasst die Vorrichtung außerdem eine mit dem Prozessor gekoppelte Anzeigevorrichtung, vorzugsweise einen Bildschirm, einen Monitor oder ein Display, auf der eine Störungsmeldung ausgegeben werden kann, wenn eine oder mehrere Ist-Ausrichtungen und/oder Ist-Positionen der bis dato in den Überwachungsbereich verbrachten Artikel nicht mit einer oder mehreren vorgegebenen Soll-Ausrichtungen und Soll-Positionen der bis dato in den Überwachungsbereich verbrachten Artikel übereinstimmen.

Vorzugsweise verfügt die Vorrichtung über einen mit dem Prozessor gekoppelten Datenspeicher, in dem alle Soll-Ausrichtungen und Soll-Positionen aller innerhalb des Überwachungsbereichs zu einer Gruppierung anzuordnender Artikel sowohl in deren Endausrichtungen und -positionen innerhalb der zu erzielenden Gruppierung, als auch während deren Überführungen aus deren Eingangsausrichtungen und -positionen in deren Endausrichtungen und -positionen hinterlegt sind.

Besonders bevorzugt verfügt die Vorrichtung über einen mit dem mindestens einen Sensor und dem Datenspeicher gekoppelten Prozessor, mittels dem ein Vergleich der anhand der Bilderfassung erkannten Ist-Ausrichtungen und Ist-Positionen der Artikel zu jedem Zeitpunkt während der Gruppierung mit den in dem Datenspeicher hinterlegten Soll-Ausrichtungen und Soll-Positionen vorgenommen werden kann. Durch einen solchen ständigen Vergleich kann ein Abweichen vom störungsfreien Betrieb frühzeitig erkannt und gegebenenfalls eine Zerstörung eines oder mehrerer Artikel durch frühzeitige Ausgabe einer Störungsmeldung verhindert werden. Der Prozessor kann der selbe sein, der anhand der Sensorsignale die Ist-Ausrichtungen und Ist-Positionen der bis dato in den Überwachungsbereich verbrachten Artikel bestimmt.

Bei mindestens einem Sensor handelt es sich vorzugsweise um einen bildgebenden Sensor, bevorzugt um mindestens eine Kamera, besonders bevorzugt um mindestens eine Videokamera. Die Bestimmung der Ist-Positionen und Ist-Ausrichtungen der bis dato in den Überwachungsbereich verbrachten Artikel erfolgt dabei durch eine Bilderfassung. Der Prozessor führt dabei einen Objekt-Erkennungsalgorithmus aus, mittels dem im vom bildgebenden Sensor erfassten Bild die bis dato in den Überwachungsbereich verbrachten Artikel erkannt und deren Ist-Positionen und Ist-Ausrichtungen bestimmt werden können. Mit dem Objekt-Erkennungsalgorithmus werden die Artikel innerhalb des mit dem Überwachungsbereich übereinstimmenden, von der Bilderfassung überwachten Bereichs in ihrer Ist-Ausrichtung und Ist-Position im von dem mindestens einen bildgebenden Sensor erfassten Bild erkannt.

Die Mittel zur Markierung von einem oder mehreren bis dato in den Überwachungsbereich verbrachten Artikeln, deren eine oder mehrere Ist-Ausrichtungen und/oder Ist-Positionen nicht mit einer oder mehreren vorgegebenen Soll-Ausrichtungen und Soll-Positionen der bis dato in den Überwachungsbereich verbrachten Artikel übereinstimmen, können Mittel zum Farbauftrag auf fehlstehende und/oder umgefallene Artikel im Überwachungsbereich umfassen. Die Mittel zum Farbauftrag können eine oder mehrere Farbsprayeinrichtungen und/oder Paintballschussvorrichtungen zur farbigen Markierung fehlstehender und/oder umgefallener Artikel im Überwachungsbereich umfassen.

Besonders bevorzugt umfassen die Mittel zur Markierung von einem oder mehreren bis dato in den Überwachungsbereich verbrachten Artikeln, deren eine oder mehrere Ist-Ausrichtungen und/oder Ist-Positionen nicht mit einer oder mehreren vorgegebenen Soll-Ausrichtungen und Soll-Positionen der bis dato in den Überwachungsbereich verbrachten Artikel übereinstimmen, eine mit dem Prozessor gekoppelte Anzeigevorrichtung, vorzugsweise einen Bildschirm, einen Monitor oder ein Display, beispielsweise diejenige Anzeigevorrichtung, auf der eine Störungsmeldung ausgegeben werden kann. Auf der Anzeigevorrichtung wird dabei das von dem mindestens einen bildgebenden Sensor erfasste Bild ausgegeben, wobei die Markierung vorsieht, diejenigen in den Überwachungsbereich verbrachten Artikeln, deren eine oder mehrere Ist-Ausrichtungen und/oder Ist-Positionen nicht mit einer oder mehreren vorgegebenen Soll-Ausrichtungen und Soll-Positionen einer aus den bis dato in den Überwachungsbereich verbrachten Artikel herzustellenden Gruppierung übereinstimmen, beispielsweise farblich, wie etwa in Fehlfarben und/oder blinkend hervorzuheben.

Alternativ oder zusätzlich kann eine Überlagerung oder eine Nebeneinanderstellung des von dem mindestens einen bildgebenden Sensor erfassten Bilds mit einem Soll-Zustand einer aus den bis dato in den Überwachungsbereich verbrachten Artikel herzustellenden Gruppierung und/oder der zu erzeugenden Gruppierung auf der Anzeigevorrichtung dargestellt werden.

Die Vorrichtung kann Teil einer eingangs beschriebenen Gruppierstation sein, welche vollautomatisch betrieben sein kann. Die Gruppierstation umfasst eine wie beispielhaft bereits vorher beschrieben bewegliche oder fest stehende Bereitstellungsfläche sowie einen oder mehrere, vorzugsweise als ein- oder mehrachsige Handhabungsautomaten ausgeführte Manipulatoren. Der von dem mindestens einen Sensor überschaute Überwachungsbereich deckt vorzugsweise die gesamte Bereitstellungsfläche ab. Der oder die Manipulatoren erzeugen Gruppierung um Gruppierung aus Artikeln eines ein- oder mehrbahnig zulaufenden Artikelstroms auf der Bereitstellungsfläche. Die Gruppierungen werden nach deren Vervollständigung immer wieder abtransportiert, um Platz für eine neue Gruppierung zu schaffen.

Dabei werden die Artikel hinsichtlich deren Eingangsausrichtung und/oder Eingangsposition im ein- oder mehrbahnig zulaufenden Artikelstrom sensorisch erfasst, um sie anschließend auf der Bereitstellungsfläche in eine Endausrichtung und -position entsprechend ihrer Anordnung in der zu erzielenden Gruppierung beispielsweise vermittels eines oder mehrerer Manipulatoren zu verbringen.

Es ist ersichtlich, dass die Erfindung verwirklicht sein kann durch eine Echtzeit-Überwachung von aus einem ein- oder mehrbahnig zulaufenden Artikelstrom in einer Eingangsausrichtung und/oder -position eintreffenden Artikeln während deren Überführung aus deren Eingangsausrichtung und -position zu deren Endausrichtung und -position innerhalb einer herzustellenden Gruppierung mehrerer Artikel vermittels mindestens eines bildgebenden Sensors, wie etwa einer Kamera, vorzugsweise einer Videokamera, sowie Markierung von Artikeln, welche eine Störung und einen Stillstand der Gruppierung bzw. einer diese durchführenden Anlage, wie etwa einer Gruppierstation verursachen. Durch die Markierung erfolgt eine Kennzeichnung der für eine Störung und eine damit einhergehende Störungsmeldung verantwortlichen Artikel. Diese Kennzeichnung verkürzt die zur Behebung der Störung benötigte Zeit und damit des Stillstands der Anlage, da nur der oder diejenigen Artikel in ihre Soll-Ausrichtung und/oder Soll-Position verbracht werden müssen oder ausgetauscht werden müssen, deren Ist-Position während und/oder nach der Überführung nicht der Soll-Position entspricht. Dadurch wird auch eine Verringerung des Ausschusses erzielt, da das Verbringen beispielsweise fehlstehender oder umgefallener Artikel in deren Soll-Ausrichtung und/oder Soll-Position zumindest ohne ein vollständiges Leerräumen der Bereitstellungsfläche erfolgen kann. Darüber hinaus müssen nur gegebenenfalls beschädigte Artikel ersetzt werden.

Vorteile sind unter Anderem eine Echtzeit- oder Live- Unterstützung des Bedienpersonals beispielsweise bei der Fehlerbehebung nach einer vorangehenden Störungsmeldung. Auf der Anzeigevorrichtung kann hierzu der Soll- und der Istzustand beispielsweise als vereinfachte Grafik ausgegeben werden, um das Bedienpersonal bei der Fehlerbehebung zu unterstützen. Ein oder mehrere, die Bereitstellungsfläche überwachenden Sensoren, vorzugsweise eine Kamera, prüft dabei vorzugsweise permanent den Ist-Zustand und gleicht diesen permanent mit dem Soll-Zustand in der durch mit dem mindestens einen Sensor bzw. der Kamera gekoppelten Prozessor sowie den mit diesem verbundenen Datenspeicher gebildeten Steuerung ab. Die beiden Zustände werden als vereinfachte Grafik beispielsweisein unterschiedlicher Farbe angezeigt. Wird die tatsächliche Position eines beispielsweise durch einen Objekt-Erkennungsalgorithmus im Rahmen einer Bilderfassung erkannten Artikels verändert, wird dies gleichzeitig auf der Anzeigevorrichtung dargestellt. Sobald Ist-Zustand und Soll-Zustand übereinstimmen, kann ein positives Feedback ausgegeben werden und die Gruppierstation kann wieder in Betrieb genommen werden.

Weitere Vorteile sind ein deutlicher Zeitgewinn bei der Behebung der Ursachen von Störungsmeldungen einhergehend mit einer Verringerung von Stillständen. Der Zeitgewinn ist dabei unabhängig von der Ursache einer Störung, da wenn eine Störung beim Stand der Technik auftritt das Bedienpersonal zunächst überprüfen muss, ob fehlstehende und/oder umgefallene Artikel Ursache der Störung sind. Dieser Schritt kann bei der Erfindung eingespart werden, wenn der Grund der Störungsmeldung eine andere Ursache aufweist. Dies ist für das Bedienpersonal auch sofort ersichtlich, da in solche einem Fall keine Markierung von Artikeln stattfindet, so dass die Suche nach der Ursache einer solchen Störungsmeldung direkt an anderer Stelle begonnen werden kann.

Zusätzliche Vorteile sind, dass die Komplexität der Fehlerbehebung deutlich reduziert wird, da zum Einen das Bedienpersonal nicht mehr die Störung verursachende Artikel identifizieren muss, sondern die die Störung verursachenden Artikel beispielsweise auf der Anzeigevorrichtung oder auf der Bereitstellungsfläche vorzugsweise farblich markiert und dadurch gekennzeichnet werden, und zum Anderen sich das Bedienpersonal keine eigene und womöglich falsche Lösungsstrategie im Kopf erarbeiten muss, sondern nur noch beispielsweise auf der Anzeigevorrichtung angegebene, beispielsweise dargestellte Schritte ausführen muss, um die Ursache der Störungsmeldung zu beseitigen. Darüber hinaus kann das Bedienpersonal selbst bei der Ausführung dieser einfachen Schritte durch die Bilderfassung stets unterstützt werden.

Wichtig ist hervorzuheben, dass die Erfindung eine Beseitigung der Störung erlaubt, bei der keine Entfernung von Artikeln von der Bereitstellungsfläche erforderlich ist. Hierdurch wird eine erhebliche Verringerung von Ausschuss erreicht.

Im Folgenden sollen Ausführungsbeispiele des erfindungsgemäßen Verfahrens und seine Vorteile anhand der beigefügten Figuren näher erläutern. Darin bezeichnen gleiche Bezugszeichen gleiche oder gleich wirkende Elemente. Ferner werden der Übersicht halber nur Bezugszeichen in den einzelnen Figuren dargestellt, die für die Beschreibung der jeweiligen Figur erforderlich sind. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Figur 1: einen Ist-Zustand mit den tatsächlichen Ist-Ausrichtungen und Ist-Positionen von auf einer Bereitstellungsfläche befindlichen Artikeln in deren durch die Manipulation bis dato erzeugten Anordnung.
- Figur 2: einen Soll-Zustand mit den zu erzielenden Soll-Ausrichtungen und Soll-Positionen von auf einer Bereitstellungsfläche befindlichen Artikeln in einer durch die Manipulation bis dato aus den auf der Bereitstellungsfläche befindlichen Artikel zu erzeugenden Gruppierung.
- Figur 3: eine Markierung von im Vergleich zum Soll-Zustand im Ist-Zustand fehlstehernder und/oder falsch ausgerichteter Artikel einschließlich Darstellung einer Anleitung zur Behebung deren Fehlstellung und/oder Fehlausrichtung, um aus dem Ist-Zustand den Soll-Zustand herzustellen.

Die dargestellten Ausführungsformen stellen lediglich Beispiele dar, wie ein erfindungsgemäßes Verfahren zur Störungsmeldung bei der Gruppierung von Artikeln ausgestaltet sein kann und stellen keine abschließende Begrenzung dar. Das erfindungsgemäße Verfahren wird durch die Merkmale des Anspruchs 1 beschrieben. Weitere Ausführungsformen ergeben sich aus den abhängigen Ansprüchen.

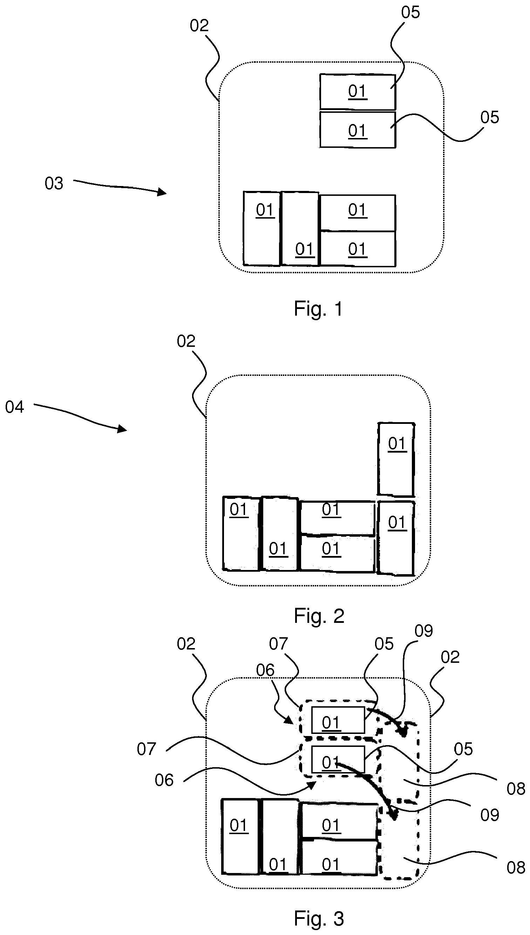

Während einer Gruppierung von Artikeln, bei der Artikel 01 aus einem ein- oder mehrbahnig zulaufenden Artikelstrom auf einer beweglichen, beispielsweise zumindest abschnittsweise mit dem Artikelstrom bewegten, oder fest stehenden Bereitstellungsfläche 02 immer wieder beispielsweise zu Artikellagen gruppiert und nach jeder Vervollständigung einer Gruppierung weiter- oder abtransportiert werden, um Platz für eine neu zu gruppierende Gruppierung zu schaffen, kommt es vor, dass ein in Figur 1 dargestellter Ist-Zustand 03 mit den tatsächlichen Ist-Ausrichtungen und Ist-Positionen von auf der Bereitstellungsfläche 02 befindlichen Artikeln 01 in deren durch die Manipulation bis dato erzeugten Anordnung nicht mit einem in Figur 2 dargestellten Soll-Zustand 04 mit den zu erzielenden Soll-Ausrichtungen und Soll-Positionen von auf einer Bereitstellungsfläche 02 befindlichen Artikeln 01 in einer durch die Manipulation bis dato aus den auf der Bereitstellungsfläche 02 befindlichen Artikel 01 zu erzeugenden Gruppierung übereinstimmt.

Im Falle einer solchen Situation, bei der ein Ist-Zustand 03 beispielsweise innerhalb vorgegebener Toleranzgrenzen nicht mit einem Soll-Zustand 04 übereinstimmt, wird die Gruppierung angehalten, um eine Beschädigung sowohl der Artikel 01, als auch von Teilen einer die Gruppierung besorgenden Anlage, wie etwa einer Gruppierstation, zu verhindern. Das Anhalten erfolgt vorzugsweise unter gleichzeitiger Ausgabe einer Störungsmeldung, beispielsweise durch einen Alarmton und/oder eine Warnleuchte und/oder durch Darstellung einer entsprechenden Information auf einer beispielsweise direkt an der Anlage und/oder in einer Maschinenleitzentrale angeordneten Anzeigevorrichtung.

Um eine solche Situation erkennen zu können, werden bei der Gruppierung nicht nur die Artikel 01 hinsichtlich deren Eingangsausrichtung und/oder Eingangsposition im ein- oder mehrbahnig zulaufenden Artikelstrom sensorisch erfasst, um sie anschließend in eine Endausrichtung und Endposition entsprechend ihrer Anordnung in der zu erzielenden Gruppierung beispielsweise vermittels eines oder mehrerer Manipulatoren zu verbringen, sondern auch die auf der Bereitstellungsfläche 02 in der dem Ist-Zustand 03 entsprechenden, durch die Manipulation bis dato erzeugten Anordnung befindlichen Artikel 01 ebenfalls sensorisch erfasst, um fehlstehende oder umgefallene Artikel 05 zu erkennen.

Hierbei werden zunächst die tatsächlichen Ist-Ausrichtungen und Ist-Positionen der auf der Bereitstellungsfläche 02 befindlichen Artikel 01 anhand der sensorischen Erfassung der auf der Bereitstellungsfläche 02 befindlichen Artikel 01 gewonnen, entsprechend einem Ist-Zustand 03.

Anschließend werden fehlstehende oder umgefallene Artikel 05 durch Vergleich der tatsächlichen Ist-Ausrichtung und Ist-Position der auf der Bereitstellungsfläche 02 im Ist-Zustand 03 befindlichen Artikel 01 in deren durch die Manipulation bis dato erzeugten Anordnung mit einer zu erzielenden Soll-Ausrichtung und Soll-Position der Artikel in einer durch die Manipulation bis dato aus den auf der Bereitstellungsfläche befindlichen Artikel entsprechend dem Soll-Zustand 04 zu erzeugenden Gruppierung erkannt.

Sofern bei der vorzugsweise permanent erfolgenden Überwachung der bis dato gruppierten Artikel durch die sensorische Erfassung und den Vergleich der Ist-Ausrichtungen und Ist-Positionen der Artikel 01 auf der Bereitstellungsfläche 02 mit der zu erzielenden Soll-Ausrichtung und Soll-Position der Artikel 01 in der durch die Manipulation bis dato aus den auf der Bereitstellungsfläche 02 befindlichen Artikel zu erzeugenden Gruppierung erkannt wurde, dass sich ein oder mehrere Artikel 05 an einer falschen Position oder in einer falschen Ausrichtung befinden, erfolgt die Ausgabe einer Störungsmeldung und eine Unterbrechung der Gruppierung durch Anhalten der die Gruppierung ausführenden Anlage.

Im Falle einer Situation, bei der ein Ist-Zustand 03 beispielsweise innerhalb vorgegebener Toleranzgrenzen nicht mit einem Soll-Zustand 04 übereinstimmt, wobei erkannt wurde, dass sich ein oder mehrere Artikel 01 an einer falschen Position oder in einer falschen Ausrichtung befinden und demnach mindestens ein fehlstehender Artikel 05 vorhanden ist, erfolgt zusätzlich sowohl zu einer Ausgabe einer Störungsmeldung, als auch zu einer zu einer Unterbrechung der Gruppierung, eine automatische Behebung der Störung durch eine Änderung der Position und/oder Ausrichtung des einen oder der mehreren fehlstehenden Artikel 05, der oder die sich an einer falschen Position befinden, beispielsweise vermittels eines Roboters.

Der Roboter umfasst insbesondere mindestens einen Greifarm, mit dem er einen oder mehrere Artikel 05, die falsch ausgerichtet oder positioniert sind, greifen, schieben, drehen und/oder bewegen kann und anschließend in eine gewünschte Position und/oder Ausrichtung bewegen bzw. ausrichten kann.

Um die Ursachenfindung der Störungsmeldung zu beschleunigen und um gleichzeitig eine Beseitigung der Ursache der Störung zu erleichtern ist vorgesehen, dass mit der Störungsmeldung der eine oder die mehreren Artikel 05, die sich an einer falschen Position oder in einer falschen Ausrichtung auf der Bereitstellungsfläche 02 und/oder in der bis dato aus den auf der Bereitstellungsfläche 02 befindlichen Artikel 01 erzeugten Gruppierung befinden, beispielsweise weil sie während ihrer Verbringung in eine ihrer Position innerhalb einer zu erzeugenden Gruppierung entsprechende Endposition verloren wurden oder umgefallen sind, mit einer Markierung 06 versehen werden.

Die sensorische Erfassung des Ist-Zustands 03 mit der der Ist-Ausrichtung und Ist-Position der Artikel 01 auf der Bereitstellungsfläche 02 anhand einer Bilderfassung, wie sie durch Kameras bekannt ist, beispielsweise vermittels eines oder mehrerer bildgebender Sensoren, sowie durch einen Objekt-Erkennungsalgorithmus, mit dem die Artikel 01 innerhalb des von der Bilderfassung überwachten Bereichs, der vorzugsweise die gesamte Bereitstellungsfläche 02 abdeckt, in ihrer Ausrichtung und Lage erkannt werden können.

Dabei kann die Ausgabe der Störungsmeldung unter gleichzeitiger Darstellung des vermittels der Bilderfassung erfassten Bilds und/oder der vermittels der Bilderfassung erkannten Artikel 01 auf der Bereitstellungsfläche 02 in deren Ist-Ausrichtungen und Ist-Positionen auf einer Anzeigevorrichtung, wie etwa einem Bildschirm, einem Monitor oder einem Display, erfolgen.

Dabei ist es besonders vorteilhaft, dass die vorgesehene Markierung 06 erfolgt, indem der eine oder die mehreren Artikel 05, die sich an einer falschen Position oder in einer falschen Ausrichtung auf der Bereitstellungsfläche 02 und/oder in der bis dato aus den auf der Bereitstellungsfläche 02 befindlichen Artikel 01 erzeugten Gruppierung befinden, markiert werden, indem das von dem mindestens einen bildgebenden Sensor erfasste Bild des Ist-Zustands 03 auf einer Anzeigevorrichtung dargestellt wird, wobei die fehlstehenden oder umgefallenen Artikel 05 beispielsweise durch eine farbliche Darstellung, beispielsweise in Fehlfarben, sofern die Bilderfassung und deren Widergabe in Farbe erfolgen, und/oder wie in Figur 3 beispielhaft dargestellt durch eine Umrahmung 07 markiert und dadurch hervorgehoben werden.

Ebenfalls denkbar ist eine vorgesehene Markierung 06 und dadurch Hervorhebung fehlstehender, beispielsweise umgefallener Artikel 05 in dem auf der Anzeigevorrichtung wiedergegebenen, vermittels der Bilderfassung erfassten Bilds durch Überblendung einer Grafik, welche der Darstellung eines fehlstehenden Artikels 05 an dessen Darstellungsort auf der Anzeigevorrichtung in dessen Ist-Position und Ist-Ausrichtung sowie gegebenenfalls in dessen tatsächlicher Ausdehnung überlagert ist. Eine solche Grafik kann beispielsweise blinkend überlagert sein.

Grundsätzlich kann auch der gesamte Ist-Zustand 03, ebenso wie ein gegebenenfalls ebenfalls auf einer Anzeigevorrichtung angezeigter Soll-Zustand 04 als Grafik erfolgen, beispielsweise ohne Darstellung eines tatsächlich erfassten Bilds.

Alternativ denkbar als vorgesehene Markierung 06 ist ein Farbauftrag auf fehlstehende Artikel 05, welcher beispielsweise vermittels eines Farbstrahls bzw. Farbsprays oder vermittels Schuss eines Paintballs auf einen fehlstehenden Artikel 05 erfolgen kann.

Darüber hinaus ist es möglich, wie in Figur 3 dargestellt, eine aktive Unterstützung bei der Beseitigung der Ursache einer Störungsmeldung vorzusehen. Dabei kann abhängig vom Fehlerbild auf einer Anzeigevorrichtung dargestellt werden, durch Entfernung und/oder Drehung und/oder Verschiebung welchen mindestens einen fehlstehenden Artikels 05 eine durch eine zu erzielende Gruppierung vorgegebene Anordnung von Artikeln 01 dem Soll-Zustand 04 einer bis dato aus den auf der Bereitstellungsfläche 02 befindlichen Artikeln 01 zu erzeugenden Gruppierung entspricht. Hierzu kann in einer Darstellung auf einer Anzeigevorrichtung zusätzlich zu einer Markierung 06 mindestens eines fehlstehenden Artikels 05 ein Platzhalter 08 für den mindestens einen fehlstehenden Artikel 05 angezeigt werden, wobei wenn der fehlstehende Artikel 05 aus dessen Ist-Position und Ist-Ausrichtung in entsprechender Soll-Ausrichtung und Soll-Lage an den Ort des Platzhalters 08 verschoben oder verbracht wird, der Soll-Zustand 04 erhalten wird, bei dem sich der vormals fehlstehende Artikel 05 in korrekter Position und Ausrichtung befindet und die Gruppierung weiter ausgeführt werden kann. Dabei kann das Verbringen bzw. das Verschieben beispielsweise durch Bewegungspfeile 09 unterstützt dargestellt sein.

Hierdurch können falsche Korrekturen vermeiden werden. Ist der Soll-Zustand 03 einer bis dato erzeugten Gruppierung erreicht, kann eine Freigabe erfolgen und die Gruppierstation wieder in Betrieb genommen werden. Darüber hinaus kann bei einer falschen Korrektur auf dem dann vorliegenden Ist-Zustand eine neue Lösung auf der Anzeigevorrichtung dargestellt werden.

Eine zur Durchführung eines zuvor beschriebenen Verfahrens geeignete Vorrichtung, welche nicht Teil der Erfindung ist, umfasst einen oder mehrere einen vorzugsweise die Bereitstellungsfläche 02 einschließenden Überwachungsbereich überschauende Sensoren. Diese geben Sensorsignale aus, die abhängig von den Ist-Ausrichtungen und Ist-Positionen von bis dato in den Überwachungsbereich verbrachten Artikeln 01 sind. Die Sensoren sind so angebracht, dass die Ist-Ausrichtung und Ist-Position von in den Überwachungsbereich einfahrenden Artikeln 01 erkannt und verfolgt werden kann. Ferner umfasst die Vorrichtung einen mit dem mindestens einen Sensor gekoppelten Prozessor, der anhand der Sensorsignale die Ist-Ausrichtungen und Ist-Positionen der bis dato in den Überwachungsbereich verbrachten Artikel 01 bestimmt. Um die Markierung 06 vorzunehmen umfasst die Vorrichtung darüber hinaus entsprechende Mittel zur Markierung 06 von einem oder mehreren bis dato in den Überwachungsbereich verbrachten Artikeln 05, deren einen Ist-Zustand 03 bildenden eine oder mehrere Ist-Ausrichtungen und/oder Ist-Positionen nicht mit einer oder mehreren, einen Soll-Zustand 04 bildenden, vorgegebenen Soll-Ausrichtungen und Soll-Positionen der bis dato in den Überwachungsbereich verbrachten Artikel 01 übereinstimmen.

Bei mindestens einem Sensor handelt es sich vorzugsweise um einen den Überwachungsbereich überschauenden bildgebenden Sensor, bevorzugt um mindestens eine Kamera, besonders bevorzugt um mindestens eine Videokamera. Die Bestimmung der Ist-Positionen und Ist-Ausrichtungen der bis dato in den Überwachungsbereich verbrachten Artikel erfolgt dann durch eine Bilderfassung. Der Prozessor führt hierbei einen Objekt-Erkennungsalgorithmus aus, mittels dem im vom bildgebenden Sensor erfassten Bild die bis dato in den Überwachungsbereich verbrachten Artikel 01 erkannt und deren Ist-Positionen und Ist-Ausrichtungen bestimmt werden.

Die Mittel zur Markierung 06 von einem oder mehreren bis dato in den Überwachungsbereich verbrachten Artikeln 05, deren eine oder mehrere Ist-Ausrichtungen und/oder Ist-Positionen nicht mit einer oder mehreren vorgegebenen Soll-Ausrichtungen und Soll-Positionen der bis dato in den Überwachungsbereich verbrachten Artikel 01 übereinstimmen, können Mittel zum Farbauftrag auf fehlstehende und/oder umgefallene Artikel 05 im Überwachungsbereich umfassen. Die Mittel zum Farbauftrag können eine oder mehrere Farbsprayeinrichtungen und/oder Paintballschussvorrichtungen zur beispielsweise farbigen Kennzeichnung fehlstehender und/oder umgefallener Artikel im Überwachungsbereich umfassen.

Alternativ können die Mittel zur Markierung 06 eine mit dem Prozessor gekoppelte Anzeigevorrichtung umfassen, auf der eine Störungsmeldung ausgegeben wird, wenn eine oder mehrere Ist-Ausrichtungen und/oder Ist-Positionen der bis dato in den Überwachungsbereich verbrachten Artikel 01 nicht mit einer oder mehreren vorgegebenen Soll-Ausrichtungen und Soll-Positionen der bis dato in den Überwachungsbereich verbrachten Artikel 01 übereinstimmen, und/oder ein von mindestens einem als bildgebender Sensor ausgeführten, den Überwachungsbereich überschauenden Sensor erfasstes Bild ausgegeben wird. Die Markierung 06 kann hierbei vorsehen, den- oder diejenigen in den Überwachungsbereich verbrachten Artikeln 05, deren eine oder mehrere Ist-Ausrichtungen und/oder Ist-Positionen nicht mit einer oder mehreren vorgegebenen Soll-Ausrichtungen und Soll-Positionen einer aus den bis dato in den Überwachungsbereich verbrachten Artikel 01 herzustellenden Gruppierung übereinstimmen, beispielsweise farblich, wie etwa in Fehlfarben und/oder blinkend hervorzuheben. Alternativ oder zusätzlich kann auf der Anzeigevorrichtung ein Soll-Zustand 04 einer aus den bis dato in den Überwachungsbereich verbrachten Artikel 01 herzustellenden Gruppierung, und/oder die zu erzeugende Gruppierung dargestellt werden.

Die Vorrichtung kann einen mit dem Prozessor gekoppelten Datenspeicher umfassen, in dem alle Soll-Ausrichtungen und Soll-Positionen aller innerhalb des Überwachungsbereichs zu einer Gruppierung anzuordnender Artikel 01 sowohl in deren Endausrichtungen und -positionen innerhalb der zu erzielenden Gruppierung, als auch während deren Überführungen aus deren Eingangsausrichtungen und -positionen in deren Endausrichtungen und -positionen hinterlegt sind, so dass zu jedem Zeitpunkt während der Gruppierung ein Vergleich der anhand der Sensorsignale erkannten Ist-Ausrichtungen und Ist-Positionen der in den Überwachungsbereich verbrachten Artikel 01 mit den in dem Datenspeicher hinterlegten Soll-Ausrichtungen und Soll-Positionen vorgenommen werden kann.

Die Vorrichtung kann Teil einer Gruppierstation sein, welche eine bewegliche, beispielsweise zumindest abschnittsweise mit dem Artikelstrom mitbewegte, oder fest stehende Bereitstellungsfläche 02 umfasst sowie einen oder mehrere, vorzugsweise als ein- oder mehrachsige Handhabungsautomaten ausgeführte Manipulatoren, welche Gruppierung um Gruppierung aus Artikeln 01 eines ein- oder mehrbahnig zulaufenden Artikelstroms auf der Bereitstellungsfläche 02 erzeugen, welche Gruppierungen nach deren Vervollständigung immer wieder abtransportiert werden, um Platz für eine neue Gruppierung zu schaffen. Der von dem mindestens einen Sensor überschaute Überwachungsbereich deckt vorzugsweise die gesamte Bereitstellungsfläche ab. Die Artikel werden hinsichtlich deren Eingangsausrichtung und -position im ein- oder mehrbahnig zulaufenden Artikelstrom sensorisch erfasst, um sie anschließend auf der Bereitstellungsfläche in eine Endausrichtung und -position entsprechend ihrer Anordnung in der zu erzielenden Gruppierung beispielsweise vermittels mindestens eines Manipulators zu verbringen.

Wichtig ist hervorzuheben, dass alternativ oder zusätzlich die Markierung 06 und/oder die Darstellung des Soll-Zustands 03 und/oder die Darstellung der Umrahmung 07 und/oder die Darstellung eines oder mehrerer Platzhalter 08 und/oder die Darstellung eines oder mehrerer Bewegungspfeile 09 durch eine Projektion, vorzugsweise eine Lichtprojektion vermittels einer optischen Projektionsvorrichtung direkt auf der Bereitstellungsfläche 02 erfolgen bzw. stattfinden kann. Geeignete optische Projektionsvorrichtungen sind beispielsweise im deutschen auch als Beamer bezeichnete Videoprojektoren und/oder konzentrierte, gegebenenfalls bewegte Lichtstrahlen, wie sie beispielsweise von Laserpointern bekannt sind, mit denen fehlstehende Artikel 05 zu deren Markierung 06 angeleuchtet werden können oder durch deren Bewegung beispielsweise Umrahmungen 07 und/oder Platzhalter 08 und/oder Bewegungspfeile 09 auf die Bereitstellungsfläche 02 projiziert werden können, beispielsweise um das Erkennen und/oder Beheben der Ursache einer Störungsmeldung weiter zu vereinfachen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

Die Erfindung ist beispielsweise bei der Herstellung und dem Betrieb von Anlagen zum Umgang mit Artikeln gewerblich anwendbar.

### Bezuaszeichenliste

- 01: Artikel
- 02: Bereitstellungsfläche
- 03: Ist-Zustand
- 04: Soll-Zustand
- 05: fehlstehender Artikel
- 06: Markierung
- 07: Umrahmung
- 08: Platzhalter
- 09: Bewegungspfeil

## Patentansprüche

1. Verfahren zur Störungsmeldung bei der Gruppierung von Artikeln (01), wobei bei der Gruppierung:
- Artikel (01) aus einem zulaufenden Artikelstrom auf einer Bereitstellungsfläche (02) gruppiert und nach der Vervollständigung der Gruppierung abtransportiert werden, um Platz für eine neue Gruppierung zu schaffen,
- die Artikel (01) hinsichtlich deren Eingangsausrichtung und/oder -position im Artikelstrom sensorisch erfasst werden, um sie anschließend in eine Endausrichtung und Endposition entsprechend ihrer Anordnung in der zu erzielenden Gruppierung zu verbringen,
- die auf der Bereitstellungsfläche (02) befindlichen Artikel (01) ebenfalls sensorisch erfasst werden,
umfassend die Verfahrensschritte:
- Gewinnung einer tatsächlichen Ist-Ausrichtung und Ist-Position (03) der auf der Bereitstellungsfläche (02) befindlichen Artikel (01) anhand der sensorischen Erfassung der auf der Bereitstellungsfläche (02) befindlichen Artikel (01),
- Erkennen fehlstehender oder umgefallener Artikel (05) durch Vergleich der tatsächlichen Ist-Ausrichtung und Ist-Position (03) der auf der Bereitstellungsfläche (02) befindlichen Artikel (01) mit einer zu erzielenden Soll-Ausrichtung und Soll-Position (04) der Artikel (01) in einer bis dato aus den auf der Bereitstellungsfläche (02) befindlichen Artikel (01) zu erzeugenden Gruppierung,
- wenn erkannt wurde, dass sich ein oder mehrere Artikel (05) an einer falschen Position oder in einer falschen Ausrichtung befinden:
- Ausgabe einer Störungsmeldung und
- Unterbrechung der Gruppierung, und
- automatische Behebung der Störung durch eine Änderung der Position und/oder Ausrichtung des einen oder der mehreren Artikel (05), der oder die sich an einer falschen Position befinden,
wobei eine sensorische Erfassung der Ist-Ausrichtung und Ist-Position (03) der Artikel (01, 05) auf der Bereitstellungsfläche (02) anhand einer Bilderfassung erfolgt,
und wobei der eine oder die mehreren Artikel (05), die sich an einer falschen Position oder in einer falschen Ausrichtung auf der Bereitstellungsfläche (02) und/oder in der bis dato aus den auf der Bereitstellungsfläche (02) befindlichen Artikel (01) erzeugten Gruppierung befinden, markiert werden.

2. Verfahren nach Anspruch 1, **dadurch gekennzeichnet, dass** die Markierung (06) vermittels:
- Farbmarkierung und/oder
- einer blinkenden Darstellung fehlstehender oder umgefallener Artikel (05) auf einer Anzeigevorrichtung zusätzlich zum auch verbleibende Artikel (01) in einer bis dato erzeugten Gruppierung wiedergebenden Bild einer Bilderfassung und/oder
- durch eine Projektion auf die fehlstehenden oder umgefallenen Artikel (05) auf der Bereitstellungsfläche (02)
erfolgt.

3. Verfahren nach Anspruch 2, **dadurch gekennzeichnet, dass** die Farbmarkierung:
- durch einen Farbauftrag, und/oder
- durch eine farbige Darstellung zumindest fehlstehender oder umgefallener Artikel (05) in deren momentanen Ist-Position und Lage (03) auf einer Anzeigevorrichtung, und/oder
- durch eine Darstellung in Fehlfarben zumindest fehlstehender oder umgefallener Artikel (05) in deren momentanen Ist-Position und Lage (03) auf einer Anzeigevorrichtung und/oder
- durch eine Projektion farbigen Lichts auf zumindest fehlstehende oder umgefallene Artikel (05) in deren momentanen Ist-Position und Lage (03) auf der Bereitstellungsfläche (02)
erfolgt.

4. Verfahren nach einem der Ansprüche 1 bis 3, **gekennzeichnet durch** eine Ausgabe der Störungsmeldung unter gleichzeitiger Darstellung des vermittels der Bilderfassung erfassten Bilds und/oder der vermittels der Bilderfassung erkannten Artikel (01) auf der Bereitstellungsfläche in deren Ist-Ausrichtungen und Ist-Positionen (03) auf einer Anzeigevorrichtung.

5. Verfahren nach einem der vorherigen Ansprüche, **gekennzeichnet durch** eine gleichzeitige Anzeige des Soll-Zustands (04) der bis dato auf der Bereitstellungsfläche (02) gruppierten Artikel (019 und/oder der zu erzeugenden Gruppierung.

6. Verfahren nach Anspruch 5, **dadurch gekennzeichnet, dass** die gleichzeitige Anzeige des Soll-Zustands (049 der bis dato gruppierten Artikel (01) und/oder der zu erzeugenden Gruppierung auf derselben Anzeigevorrichtung erfolgt, auf der auch die Störungsmeldung ausgegeben wird und/oder auf der die momentane Position und Lage (04) zumindest fehlstehender oder umgefallener Artikel (05) dargestellt wird und/oder vermittels einer Projektion auf die Bereitstellungsfläche (02) erfolgt.

7. Verfahren nach Anspruch 5 oder 6, **dadurch gekennzeichnet, dass** die gleichzeitige Anzeige fehlstehender oder umgefallener Artikel (05) und des Soll-Zustands (04) der bis dato gruppierten Artikel (01) und/oder der zu erzeugenden Gruppierung als Überlagerung, Nebeneinanderstellung oder abwechselnde Widergabe eines Bilds des Ist-Zustands (03) und eines Bilds des Soll-Zustands (04) auf einer Anzeigevorrichtung und/oder vermittels einer Projektion auf die Bereitstellungsfläche (02) erfolgt.

8. Verfahren nach einem der vorhergehenden Ansprüche, **dadurch gekennzeichnet, dass** die Gruppierung nicht von Beginn an, sondern von einem passenden Gruppierungsschritt an selbständig wieder fortgesetzt wird, sobald ein Zustand (04) wiederhergestellt ist, der einer am Ende eines der Störungsmeldung vorangehenden Gruppierungsschritts oder am Ende des Gruppierungsschritts, während dem die Störungsmeldung erfolgte, vorliegenden, bis dato aus den auf der Bereitstellungsfläche (02) befindlichen Artikeln (01) zu erzeugenden Gruppierung entspricht.

9. Verfahren nach einem der vorhergehenden Ansprüche, **gekennzeichnet durch** eine vollautomatische Behebung der Störung anhand der erfassten Ist-Ausrichtungen und Ist-Positionen (03) und durch Vergleich mit den Soll-Ausrichtungen und Soll-Positionen (04) der bis dato einer Gruppierung unterzogenen Artikel (01), wobei diejenigen Artikel (05), die sich nicht in Soll-Ausrichtung und Soll-Position (04) innerhalb einer bis dato zu erzeugenden Anordnung einer zu erhaltenden Gruppierung befinden erkannt und vermittels eines oder mehrerer, die Gruppierung auf der Bereitstellungsfläche (02) besorgender Manipulatoren aus deren Ist-Ausrichtung und/oder Ist-Position (03) in deren erforderliche Soll-Ausrichtung und/oder Soll-Position (04) verbracht werden.

10. Verfahren nach einem der Ansprüche 1 bis 8, **gekennzeichnet durch** eine Unterstützung bei der Beseitigung der Ursache einer Störungsmeldung, wobei auf einer Anzeigevorrichtung dargestellt wird, durch Entfernung und/oder Drehung und/oder Verschiebung welchen fehlstehenden Artikels (05) oder welcher fehlstehender Artikel (05) eine durch eine zu erzielende Gruppierung vorgegebene Anordnung von Artikeln (01) dem Soll-Zustand (04) einer bis dato aus den auf der Bereitstellungsfläche (02) befindlichen Artikeln (01) zu erzeugenden Gruppierung entspricht.

## Claims

1. Method for reporting disruption in the grouping of articles (01), wherein during the grouping:
- articles (01) from an incoming article flow are grouped on a staging surface (02) and are transported away after completion of the grouping in order to make space for a new grouping;
- the articles (01) are detected by sensor with regard to their entry alignment and/or entry position in the article flow in order to subsequently bring them into a final alignment and final position corresponding to their arrangement in the grouping to be achieved;
- the articles (01) located on the staging surface (02) are also detected by sensor;
comprising the process steps:
- obtaining an effective actual alignment and an actual position (03) of the articles (01) located on the staging surface (02) with the aid of the sensor detection of the articles (01) located on the staging surface (02);
- recognizing mispositioned or fallen articles (05) by comparing the effective actual alignment and actual position (03) of the articles (01) located on the staging surface (02) with a desired alignment and a desired position (04) of the articles (01) to be achieved in a grouping to be formed up to that point from the articles (01) that are located on the staging surface (02);
- if it is recognized that one or a plurality of articles (05) are in a wrong position or in a wrong alignment:
- issuing of a disruption message; and
- interrupting of the grouping; and
- automatic removing of the disruption by modifying the position and/or the alignment of the one or of the plurality of articles (05), which is or are in a wrong position,
wherein a sensory detection of the actual orientation and actual position (03) of the articles (01, 05) on the provision area (02) is carried out on the basis of image detection,
and wherein the one article or the plurality of articles (05), which are located in a wrong position or in a wrong alignment on the staging surface (02) and/or in the grouping having been formed up to that point from the articles (01) located on the staging surface (02), are marked.

2. Method as recited in claim 1, **characterized in that** the marking (06) is performed by means of:
- color marking, and/or
- a flashing presentation of mispositioned or fallen articles (05) on a display device over and above the image additionally presented by an image detection means of the remaining articles (01) in a grouping having been formed up to that point, and/or
- by means of a projection onto the mispositioned or fallen articles (05) on the staging surface (02).

3. Method as recited in claim 2, **characterized in that** the color marking is performed:
- by means of a paint application, and/or
- by means of a colored presentation at least of mispositioned or fallen articles (05) in their present actual position and arrangement (03) on a display device, and/or
- by means of a presentation at least of mispositioned or fallen articles (05) in their present actual position and arrangement (03) in wrong colors, and/or
- by means of a projection of colored light at least onto mispositioned or fallen articles (05) in their present actual position and arrangement (03) on the staging surface (02).

4. Method as recited in the claims 1 to 3, **characterized by** an issuing of the disruption message with the simultaneous presentation on a display device of the image detected by means of the image detection and/or of the articles (01) recognized on the staging surface in their actual alignments and actual positions (03) by means of the image detection.

5. Method as recited on one of the previous claims, **characterized by** a simultaneous display of the desired state (04) of the articles (01) having been grouped up to that point on the staging surface (02) and/or of the grouping to be formed.

6. Method as recited in claim 5, **characterized in that** the simultaneous display of the desired state (04) of the articles (01) having been grouped up to that point and/or of the grouping to be formed is performed on the same display device, on which the disruption message is also issued and/or on which the present position and arrangement (04) at least of mispositioned or fallen articles (05) is presented and/or performed by means of a projection onto the staging surface (02).

7. Method as recited in claim 5 or 6, **characterized in that** the simultaneous display of mispositioned or fallen articles (05) and of the desired state (04) of the articles (01) having been grouped up to that point and/or of the grouping to be formed is performed by way of overlay, juxtaposition, or alternating rendition of an image of the actual state (03) and of an image of the desired state (04) on a display device and/or by means of a projection onto the staging surface (02).

8. Method as recited in one of the previous claims, **characterized in that** the grouping is not continued from the very beginning on, but is rather independently continued from a suitable grouping step on, as soon as a state (04) has been reestablished that corresponds to a grouping to be formed up to that point from the articles (01) located on the staging surface (02), which grouping is present at the end of a grouping step preceding the disruption message or at the end of the grouping step during which the disruption message occurred.

9. Method as recited in one of the previous claims, **characterized by** a fully automatic removal of the disruption by means of the detected actual alignments and actual positions (03) and by comparison with the desired alignments and desired positions (04) of the articles (01) that have undergone a grouping up to that point, wherein those articles (05) are recognized that are not located in the desired alignment and in the desired position (04) within an arrangement to have been formed up to that point for a grouping to be achieved, and are brought from their actual alignment and/or their actual position (03) into their required desired alignment and/or desired position (04) by means of one or a plurality of manipulators providing the grouping on the staging surface (02).

10. Method as recited in one of the claims 1 to 8, **characterized by** a support in removing the cause of a disruption message, wherein it is presented on a display device, by the removal and/or rotation and/or shifting of which mispositioned article (05) or of which mispositioned articles (05) an arrangement of articles (01) specified by a grouping to be achieved corresponds to the desired state (04) of a grouping to be formed up to that point from the articles (01) located on the staging surface (02).

## Revendications

1. Procédé de signalement de dérangement lors du regroupement d'articles (01), dans lequel, lors du regroupement:
- des articles (01) provenant d'un courant d'articles entrant sont regroupés sur une surface de mise à disposition (02) et, une fois le regroupement achevé, ils sont évacués afin de laisser place à un nouveau regroupement,
- les articles (01) sont détectés par capteur quant à leur orientation et/ou position d'entrée dans le courant d'articles afin de les amener ensuite à une orientation finale et à une position finale suivant leur orientation dans le groupement à obtenir,
- les articles (01) se trouvant sur ladite surface de mise à disposition (02) sont détectés, eux aussi, par capteur,
comprenant les étapes suivantes de procédé consistant à:
- obtenir une orientation réelle et une position réelle (03) effectives des articles (01) se trouvant sur la surface de mise à disposition (02), à l'aide de la détection par capteur des articles (01) se trouvant sur la surface de mise à disposition (02),
- détecter des articles (05) mal positionnés ou renversés en comparant l'orientation réelle et la position réelle (03) effectives des articles (01) se trouvant sur la surface de mise à disposition (02) à une orientation préscrite et à une position préscrite (04) à obtenir des articles (01) dans un groupement à produire jusqu'à présent à partir des articles (01) se trouvant sur la surface de mise à disposition (02),
- lorsqu'il a été détecté qu'un ou plusieurs articles (05) se trouve(nt) sur une mauvaise position ou dans une mauvaise orientation:
- délivrer un message de dérangement et
- interrompre le regroupement et
- réparer automatiquement le dérangement par une modification de la position et/ou de l'orientation dudit un article ou desdits plusieurs articles (05) qui se trouve(nt) sur une mauvaise position,
dans lequel une détection par capteur de l'orientation réelle et de la position réelle (03) des articles (01, 05) sur la surface de mise à disposition (02) se fait à l'aide d'une acquisition d'images,
et dans lequel ledit un ou lesdits plusieurs article(s) (05) qui se trouve(nt) sur une mauvaise position ou dans une mauvaise orientation sur la surface de mise à disposition (02) et/ou dans le groupement produit jusqu'à présent à partir des articles (01) se trouvant sur la surface de mise à disposition (02) sont marqués.

2. Procédé selon la revendication 1, **caractérisé par le fait que** le marquage (06) est réalisé par l'intermédiaire:
- d'un marquage en couleur et/ou
- d'un affichage clignotant d'articles (05) mal positionnés ou renversés sur un dispositif d'affichage, en plus de l'image d'une acquisition d'images reproduisant également des articles (01) restants dans un groupement produit jusqu'à présent, et/ou
- d'une projection sur les articles (05) mal positionnés ou renversés sur la surface de mise à disposition (02).

3. Procédé selon la revendication 2, **caractérisé par le fait que** le marquage en couleur est réalisé:
- par une application de couleur et/ou
- par une représentation en couleur, sur un dispositif d'affichage, au moins d'articles (05) mal positionnés ou renversés dans leur position réelle et orientation réelle (03) instantanées, et/ou
- par une représentation en fausses couleurs, sur un dispositif d'affichage, au moins d'articles (05) mal positionnés ou renversés dans leur position réelle et orientation réelle (03) instantanées, et/ou
- par une projection de lumière colorée au moins sur des articles (05) mal positionnés ou renversés dans leur position réelle et orientation réelle (03) instantanées sur la surface de mise à disposition (02).

4. Procédé selon l'une quelconque des revendications 1 à 3, **caractérisé par le fait que** le message de dérangement est délivré tout en affichant, sur un dispositif d'affichage, l'image acquise au moyen de l'acquisition d'images et/ou les articles (01) identifiés au moyen de l'acquisition d'images, sur la surface de mise à disposition dans leurs orientations réelles et positions réelles (03).

5. Procédé selon l'une quelconque des revendications précédentes, **caractérisé par** un affichage simultané de l'état prescrit (04) des articles (01) regroupés jusqu'à présent sur la surface de mise à disposition (02) et/ou du groupement à produire.

6. Procédé selon la revendication 5, **caractérisé par le fait que** l'affichage simultané de l'état prescrit (04) des articles (01) regroupés jusqu'à présent et/ou du groupement à produire se fait sur le même dispositif d'affichage sur lequel est délivré également le message de dérangement et/ou sur lequel sont affichées aussi la position et l'orientation (04) instantanées au moins d'articles (05) mal positionnés ou renversés, et/ou se fait par l'intermédiaire d'une projection sur la surface de mise à disposition (02).

7. Procédé selon la revendication 5 ou 6, **caractérisé par le fait que** l'affichage simultané d'articles (05) mal positionnés ou renversés et de l'état prescrit (04) des articles (01) regroupés jusqu'à présent et/ou du groupement à produire se fait en tant que superposition, juxtaposition ou reproduction alternante d'une image de l'état réel (03) et d'une image de l'état prescrit (04) sur un dispositif d'affichage et/ou par l'intermédiaire d'une projection sur la surface de mise à disposition (02).

8. Procédé selon l'une quelconque des revendications précédentes, **caractérisé par le fait que** le regroupement n'est pas continué automatiquement à partir du début, mais qu'il est continué automatiquement à partir d'une étape de regroupement adaptée, dès qu'un état (04) est reconstitué qui correspond à un groupement qui est présent à la fin d'une étape de regroupement précédant le signalement de dérangement ou à la fin de l'étape de regroupement pendant laquelle le signalement de dérangement a eu lieu et qui est à produire jusqu'à présent à partir des articles (01) se trouvant sur la surface de mise à disposition (02).

9. Procédé selon l'une quelconque des revendications précédentes, **caractérisé par** une réparation complètement automatique du dérangement à partir des orientations réelles et positions réelles (03) détectées et par une comparaison aux orientations prescrites et positions prescrites (04) des articles (01) soumis à un regroupement jusqu'à présent, dans lequel les articles (05) qui ne se trouvent pas dans l'orientation prescrite et la position prescrite (04) à l'intérieur d'un agencement à produire jusqu'à présent d'un groupement à obtenir sont détectés et sont amenés, au moyen d'un ou de plusieurs manipulateur(s) chargés du regroupement sur la surface de mise à disposition (02), depuis leur orientation réelle et/ou position réelle (03) à leur orientation prescrite et/ou positon prescrite (04) nécessaire(s).

10. Procédé selon l'une quelconque des revendications 1 à 8, **caractérisé par** un support dans la suppression de la cause d'un message de dérangement, dans lequel il est représenté sur un dispositif d'affichage quel est l'article mal positionné (05) ou quels sont les articles mal positionnés (05) qui est/sont à éliminer et/ou à tourner et/ou à déplacer pour avoir un agencement d'articles (01) défini par un groupement à obtenir, qui correspond à l'état prescrit (04) d'un groupement à produire jusqu'à présent à partir des articles (01) se trouvant sur la surface de mise à disposition (02)
